Europäisches Patentamt

European Patent Office

Office européen des brevets

(19)

(11) Publication number: **0 267 646**
A1

## EUROPEAN PATENT APPLICATION

(21) Application number: **87202108.4**

(22) Date of filing: **02.11.87**

(51) Int. Cl.⁴: **B29C 71/02 , C08J 7/00**

(30) Priority: **04.11.86 NL 8602790**

(43) Date of publication of application:
**18.05.88 Bulletin 88/20**

(84) Designated Contracting States:
**AT BE CH DE ES FR GB GR IT LI NL SE**

(71) Applicant: **STAMICARBON B.V.**
**Mijnweg 1**
**NL-6167 AC Geleen(NL)**

(72) Inventor: **Peerlkamp, Erik Rijkele**
**Klein Holtum 39**
**NL-6122 EG Born(NL)**

(74) Representative: **Hoogstraten, Willem Cornelis**
**Roeland et al**
**OCTROOIBUREAU DSM Postbus 9**
**NL-6160 MA Geleen(NL)**

(54) Process for the production of polyamide shapes with improved properties.

(57) The invention relates to a process for the production from the melt of nylon 4.6 articles with improved properties by subjecting the articles, after these have been moulded, to heat treatment at a temperature higher than 220°C and lower than the softening point of the polyamide.

EP 0 267 646 A1

## PROCESS FOR THE PRODUCTION OF POLYAMIDE SHAPES WITH IMPROVED PROPERTIES

The invention relates to a process for the production from the melt of polyamide articles consisting substantially of tetramethylene adipamide units.

A considerable problem in the use of polytetramethylene adipamide, hereafter referred to as nylon 4.6. is that it is difficult to process from the melt. Nylon 4.6 is rather instable in the melt, which is expressed in chain breakdown, resulting in a decrease in the molecular weight, and in discoloration of the polyamide. It is clear in this context that these factors adversely affect the good properties of nylon 4.6.

A person skilled in the art can take measures to limit the decomposition of nylon 4.6 in processing in the melt. Such measures are, for instance, reducing the amount of time that the polyamide is in the molten condition and excluding oxygen. It is also possible to reduce the melting point and, consequently, the processing temperature of nylon 4.6 by means of copolymerization with other amide-forming monomers, such as E-caprolactam or hexamethylenediamine. However, this copolymerization adversely affects the mechanical properties of nylon 4.6. The stiffness in particular decreases considerably. Another measure is to choose a processing temperature very close to the melting point of nylon 4.6, preferably, for example, not more than 20□C higher. However, particularly if fillers like fibrous material, mineral fillers or inorganic flame retardants are present in or are to be introduced into the polyamide mass this process presents the disadvantage that it is very difficult to maintain this limited temperature interval on account of the heat developed as a result of the shearing forces in (ad)mixing the fillers with the polyamide melt and, on the other hand, the viscosity of the (filled) melt remains relatively high, which in, for example, the injection moulding of objects, results in insufficient filling of the mould or in anisotropy and the so-called warpage effect in the injection moulded articles, whereas the necessity of using extremely high injection moulding pressures creates a risk of the polymer being burned. These disadvantages are to a small extent met by adding lubricants, but these sometimes present the disadvantage that they exude to the surface of the objects formed and adversely affect their appearance. Another process frequently applied is to choose nylon 4.6 with such a high molecular weight, preferably higher than that corresponding to a relative viscosity $\eta$ rel > 2.5 determined in a solution of 1 gram in 100 ml of 96 wt% sulphuric acid, that, despite the chain breakdown occuring in the melt, articles are produced with a sufficiently high molecular weight to ensure the preservation of the superior mechanical properties. Although the processing temperatures may in this case be slightly higher, the viscosity in the melt is still relatively high because of the high molecular weight and this presents problems in producing thin-walled articles by means of injection moulding on account of insufficient flow in the mould.

The aim of the invention now is to provide a process for the production of nylon 4.6 articles from the melt, which process entirely or almost entirely removes the aforementioned disadvantages.

The inventor has now found that nylon 4.6 articles with superior properties can be produced in processing from the melt by subjecting the articles moulded from the melt to a heat treatment.

The process for the production from the melt of an article of a polyamide consisting substantially of tetramethyleneadipamide units is characterized in that, after having been moulded from the melt, the article is subjected to a heat treatment at a temperature higher than 220□C, but lower than the softening point of the polyamide. Preferably, a temperature between abt. 240 and abt. 275□C is chosen.

The duration of the heat treatment may vary within wide limits and depends, for example, on the processing conditions in the melt, the thickness of the articles and the temperature level of the heat treatment. For practical reasons the duration will usually be limited to 24 hours, whereas heat treatment of less than 1/4 of an hour is usually not very effective. There is little sense in applying temperatures below 220□C, because in that case it takes a long time for any effect of the treatment to become observable, whereas applying temperatures above the softening point may result in deformation of the article.

This heat treatment must not be confused with the so-called annealing, the stress relieving of articles by means of heating at increased temperatures which are, however, considerably lower than the temperature according to the invention. This treatment is described in, for instance, US-A-3504077 and US-A-4455417. For polyamides such as nylon 6 and nylon 6,6 this annealing temperature is generally less than ab. 180□C.

Surprisingly, and unlike, for example, articles produced with nylon 6 or nylon 6,6, articles subjected to the heat treatment at 220-275□C according to the invention showed a minimized decrease in molecular weight and in many cases even a considerable increase in molecular weight with respect to nylon 4.6 in processing via the melt.

It is preferable to subject the articles to the heat treatment according to the invention immediately after they have been moulded from the melt and before they have cooled completely so that only little heat need be added to bring the article to the temperature required. This does not mean that the articles may not be subjected to the heat treatment at a later stage.

The process according to the invention presents a particular advantage in producing thick articles.

The state-of-the-art production of, for instance, semi-manufactured articles such as extruded bars from which smaller products are obtained by, for example, machining, results in a difference in molecular weight between the core and the periphery of the bar. This can be determined by measuring the relative viscosities of material from the core and from the periphery of the bar. The heat treatment according to the invention minimizes these differences and, as a result, the mechanical properties are now more or less the same over the full diameter of the bar. This effect of the treatment according to the invention is particularly visible in articles that are at least 0.5 cm thick.

The process according to the invention also presents a particular advantage if filled, in particular fibre-filled, nylon 4.6 is used. In this case it appears to be possible to obtain an end product with good mechanical properties from a polyamide which has a relatively low molecular weight ($\eta_{rel} < 2.5$), and less good mechanical properties, but is readily processable.

The polyamide consisting substantially of tetramethyleneadipamide units may also contain other monomer components partly replacing the tetramethylene adipamide or adipic acid component. The copolymer content is in principle not limited, but may not be more than 50%. In practice, however, not more than 30%, preferably less than 20%, is usually used. Copolymers may, for instance, be amideforming compounds such as lactams, dicarboxylic acids and diamines, imide-forming compounds and ester-forming compounds, such as ethylene terephthalate and butyl terephthalate.

The heat treatment is preferably effected in an inert gas atmosphere containing water vapour.

The invention will now be further elucidated with the following examples without, however, being limited thereto.

Example I

Test bars with dimensions ($13 \times 65 \times 3$ mm$^3$) are injection moulded, using STANYLR, nylon 4.6, produced by DSM at Geleen, the Netherlands, with a relative viscosity $\eta_{rel} = 3.56$.

The injection moulding temperature is about 315□C, the temperature of the mould being 60□C.

The bars are subjected to a heat treatment at 260□C and atmospheric pressure in a nitrogen atmosphere containing 12 vol% water vapour.

The properties of the bars are determined after different time intervals; see Table 1.

TABLE 1

| duration of heat treatment (hours) | $\eta$ rel |
|---|---|
| 0 | 3.34 |
| 4 | 3.95 |
| 20 | 4.55 |

Comparative example and example II

A bar of nylon 4.6 with a diameter of 8 cm is produced by means of extrusion.

STANYL, nylon 4.6 with a $\eta$ rel = 3.8, manufactured by DSM at Geleen the Netherlands, is used to produce the bar.

The relative viscosities are determined of the core and the periphery of the bar produced with the usual methods.

periphery  :$\eta$ rel = 3.4
core    :$\eta$ rel = 3.8.

Immediately after the extrusion process, the bar is subjected to a heat treatment at 265□C in a nitrogen atmosphere containing 10 vol% water vapour.
Subsequently. the relative viscosity of the core and the periphery are determined
periphery    :$\eta$rel = 3.8
core    :$\eta$rel = 3.9


Comparative example and example III

Nylon 4.6 with a relative viscosity of 2.4 is mixed with 70 wt% clay (based on the total amount of nylon and clay) in an extruder and then pelletized. The pellets are fed to an injection moulding machine and injection moulded to form thin-walled electric plugs.
These plugs are easily crushed.
The plugs are subsequently subjected to a heat treatment, immediately after injection moulding, for 45 minutes at 260□C in a nitrogen atmosphere containing 10 vol% water vapour.
The plugs now exhibit good mechanical strength. The relative viscosity of the nylon 4.6 appears to have increased to 2.9.
If nylon 4.6 with a $\eta_{rel}$ of 3.4 is used instead of that with a $\eta_{rel}$ of 2.4, a much higher pressure is required to completely fill the mould in injection moulding the plug and the plug produced appears to show discolorations. The $\eta_{rel}$ of the polyamide in the plug is then also 2.9 after injection molding without heat treatment.


**Claims**

1. Process for the production from the melt of an article of a polyamide consisting substantially of tetramethyleneadipamide units, characterized in that, after having been moulded from the melt, the article is subjected to a heat treatment at a temperature higher than 220□C, but lower than the softening point of the polaymide.

2. Process according to claim 1, characterized in that the heat treatment is effected at a temperature between 240 and 275□C.

3. Process according to claim 1 or 2, characterized in that the heat treatment immediately follows moulding from the melt.

4. Process according to anyone of the claims 1-3, characterized in that the article is at least 0.5 cm thick.

5. Process according to anyone of the claims 1-3, characterized in that, before being moulded from the melt, the polyamide consisting substantially of tetramethylene adipamide units, if so required containing fillers, has a relative viscosity of less than 2.5, as determined in a solution of 1.0 grams in 100 ml of 96 wt% sulphuric acid.

6. Process according to any one of the claims 1-5, characterized in that the heat treatment is effected in an inert gas atmosphere containing water vapour.

7. Article produced according to the process of any one of the preceding claims.

8. Product obtained with or from one or more articles according to claim 7.

9. Process and article obtained according to the process described in the specification and the examples.

4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | JP-A-61 047 813<br>* Abstract* & DERWENT abstract 8616, 8th March 1986 * | 1-3 | B 29 C 71/02<br>C 08 J 7/00 |
| X | DE-B-1 229 278 (SIEMENS)<br>* Column 1, lines 11-17,43-46 * | 1-4,7 | |
| X | JP-A-61 124 622<br>* Abstract* & DERWENT abstract 8630, 12th June 1986 * | 1,5,6 | |
| A | INTERNATIONAL POLYMER SCIENCE AND TECHNOLOGY, vol. 4, no. 10, 1977, pages T/44,T/45, A.M. AR'EV: "Selection of conditions of annealing of polyamides" | 1,2,5,6 | |
| X | DE-B-1 258 598 (BASF)<br>* Column 1, lines 1-36 * | 1-7 | |
| A | AT-B- 369 771 (VOEST-ALPINE AG)<br>* Page 2, lines 42-55; page 3, lines 1-5 * | 1-4 | TECHNICAL FIELDS SEARCHED (Int. Cl.4) |
| A | US-A-2 190 770 (W.H. CAROTHERS)<br>* Table II; claim 1 * | 1,2 | B 29 C<br>C 08 J<br>C 08 G |

The present search report has been drawn up for all claims

| Place of search | Date of completion of the search | Examiner |
|---|---|---|
| THE HAGUE | 22-01-1988 | WEINBERG J.J.M. |